(19) Europäisches Patentamt
European Patent Office
Office européen des brevets

(11) **EP 2 043 284 B1**

(12) **FASCICULE DE BREVET EUROPEEN**

(45) Date de publication et mention
de la délivrance du brevet:
**04.01.2012 Bulletin 2012/01**

(51) Int Cl.:
**H04B 17/00** *(2006.01)*

(21) Numéro de dépôt: **08165156.4**

(22) Date de dépôt: **25.09.2008**

(54) **Dispositif de mesure du taux de charge en emission d'un terminal de radiocommunications**

Vorrichtung zum Messen des Ladungsniveaus beim Senden von einem Funkkommunikationsendgerät

Device for measuring the emission load rate of a radio-communication terminal

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.09.2007 FR 0706842**

(43) Date de publication de la demande:
**01.04.2009 Bulletin 2009/14**

(73) Titulaire: **THALES**
**92200 Neuilly-sur-Seine (FR)**

(72) Inventeurs:
• **Klopp, Thierry**
**60590 Lalande en Son (FR)**

• **Trin, Jean-Marc**
**92130 Issy les Moulineaux (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
EP-A- 0 017 835      EP-A- 1 775 711
WO-A-99/34647      US-A- 5 049 884
US-A1- 2004 189 272      US-A1- 2006 055 661
US-A1- 2007 070 866

**Description**

La présente invention concerne un dispositif de mesure du taux de charge en émission d'un terminal de radiocommunications transmettant des signaux utilisant une forme d'onde du Système Multifonction de Distribution de l'Information, plus simplement désigné par l'acronyme anglo-saxon MIDS pour «Multifunctional Information Distribution System ». L'invention s'applique notamment au suivi de la densité des émissions radioélectriques de systèmes émetteurs de type MIDS et JTIDS « Joint Tactical Information Distribution System » en vue de prouver leur respect des règles de partage temporel du spectre radioélectrique alloué aux systèmes civils de radionavigation et d'aide à l'atterrissage.

Afin d'assurer de bonnes conditions de fonctionnement des appareils communiquant par ondes radioélectriques, des règles de partage sont généralement établies pour permettre une cohabitation satisfaisante entre les différentes parties prenantes utilisant ce type d'appareil. A titre d'exemple, des accords entre les autorités militaires et les services de l'aviation civile permettent de garantir le bon fonctionnement des systèmes de radionavigation et/ou d'aide à l'atterrissage de l'aviation civile en imposant aux systèmes militaires émetteurs de signaux radioélectriques des limitations et un enregistrement de leur densité temporelle d'émission. Le respect de ces accords doit être prouvé, notamment lors des enquêtes déclenchées après la survenue d'accidents aériens.

Certains terminaux émetteurs sont équipés d'un système de sécurité apte à bloquer les émissions de signaux dès que leur densité d'émission maximale autorisée est atteinte. Le déclenchement de ce système de sécurité peut rendre les terminaux inopérants et perturber les communications de manière imprévisible. Aussi, afin d'éviter d'atteindre cette densité d'émission maximale autorisée, les émissions des terminaux actuels sont généralement planifiées. Par exemple, pour les terminaux communiquant par émissions d'impulsions selon un mode d'accès multiple à répartition dans le temps, ce mode de communication étant couramment qualifié par l'acronyme TDMA en référence à l'expression anglo-saxonne « Time Division Multiple Access », la densité d'émission maximale autorisée se traduit par un nombre planifié d'impulsions maximal par cycle TDMA. Ainsi, la planification des émissions pour un tel terminal peut être effectuée en estimant le nombre d'impulsions maximal à émettre dans chacun des intervalles temporels d'un cycle TDMA, cette estimation étant réalisée, par exemple, à partir de données d'initialisation du terminal. Pour les communications en TDMA, ce nombre d'impulsions maximal est souvent exprimé sous la forme d'un TSDF à ne pas dépasser, TSDF étant un acronyme anglo-saxon pour « Time Slot Duty Factor », soit un taux de charge correspondant au rapport du nombre d'impulsions émises par le terminal sur un nombre d'impulsions fixé. Les données de planification sont consignées en guise de preuve de respect des accords.

Cependant, la planification du taux de charge d'un terminal par des données d'entrée présente des inconvénients. D'une part, les capacités maximales d'émission du terminal ne sont pas exploitées. En effet, le nombre d'impulsions émises dans certains intervalles temporels n'est pas prévisible, les émissions étant parfois sujettes à de nombreux aléas. D'autre part, les données de planification consignées ne constituent pas une preuve formelle du respect des limites imposées par les accords, puisque rien ne démontre que le nombre d'impulsions réellement émises n'est pas supérieur au nombre d'impulsions prévu dans les données de planification.

Pour améliorer la connaissance du taux de charge du terminal en émission, certains systèmes implémentent un algorithme d'estimation du taux de charge. Cet algorithme est un logiciel exécuté sur le système hôte qui pilote le terminal. L'algorithme tient compte comme précédemment de la planification des communications, il tient également compte des données à émettre envoyées par le système hôte au terminal, et il peut, si le terminal le permet, obtenir des informations de configuration dynamique du terminal ; le tout permettant d'estimer le taux maximum d'émission sur une période donnée.

L'utilisation d'un tel algorithme, qui bien qu'elle affine la connaissance du taux de charge en émission en réalisant une estimation dynamique plutôt qu'une prédiction à l'initialisation, apportant ainsi une nette amélioration par rapport à la méthode précédente, ne permet cependant pas de prendre en compte les émissions spontanées du terminal, ni même le conditionnement de l'information réalisé par le terminal pour adapter au mieux le canal radio en fonction des données à émettre. Par ailleurs, les méthodes d'estimation de l'art antérieur sont tributaires du bon fonctionnement du terminal et de son interface avec le système hôte ; enfin elles sont dépendantes de la nature de l'interface avec le terminal et de celle du système hôte. Ainsi, un portage de l'algorithme peut être nécessaire au changement de plate-forme.

Les méthodes d'obtention du taux de charge en émission s'appliquent tout particulièrement à la plage de fréquence réservée à l'aviation civile en bande L (960-1215MHz) pour les systèmes de navigation et d'aide à l'atterrissage tels que le « Distance Measuring Equipment », ou DME, cette bande de fréquence étant également utilisée pour les transmissions phonie et de données tactiques militaires selon la forme d'onde MIDS. A titre d'illustration, la forme d'onde qui est définie par la norme STANAG 4175 est basée sur une organisation TDMA à 128 intervalles temporels par seconde et une transmission par impulsion en évasion de fréquence ultra-rapide à plus de 76000 sauts/seconde.

Les équipements émetteur / récepteur de cette forme d'onde radio sont dénommés ci-après « terminal MIDS », ceci de manière générique. La famille des terminaux MIDS comprend principalement les équipements JTIDS Class-1 et JTIDS Class-2, les équipements MIDS-LVT (1 à 5) (LVT étant l'acronyme anglo-saxon pour « Low Volume Terminal »), et le futur terminal MIDS-JTRS, JTRS étant l'acronyme anglo-saxon pour « Joint Tactical Radio System ».

Les règles en vigueur destinées à cadrer la cohabitation des émissions MIDS avec celles les systèmes de navigation et d'aide à l'atterrissage civil sont connues sous le terme générique de « MIDS FCA », FCA étant l'acronyme anglo-saxon pour « Frequency Clearance Agreements »). Ces règles sont recensées pour chaque pays utilisateur du MIDS dans le rapport régulier réalisé par le groupe de travail « JTIDS / MIDS MULTINATIONAL AD HOC SPECTRUM SUPPORT WORKING GROUP ». Elles définissent en particulier le taux de charge en émission maximum d'un terminal MIDS, sous le terme TSDF.

Un but de l'invention est de proposer un dispositif fiable et peu coûteux permettant de réaliser une mesure précise du taux de charge en émission d'un terminal de radiocommunications. A cet effet, l'invention a pour objet un dispositif de détermination du taux de charge d'un terminal de radiocommunications émetteurs d'impulsions, le taux de charge étant déterminé sur un cycle répété dans le temps d'une durée $\Delta t$, le dispositif recevant un signal comprenant un train de repères, chaque repère correspondant à une impulsion émise par le terminal, le dispositif étant caractérisé en ce qu'il comporte un oscillateur local et un microcontrôleur apte à compter les repères dudit signal sur la durée $\Delta t$ pour calculer une valeur de taux de charge en émission, le microcontrôleur évaluant la durée $\Delta t$ en comptant les oscillations délivrées par l'oscillateur local.

Le dispositif selon l'invention peut ainsi remplacer les algorithmes classiques d'estimation dudit taux de charge. Le dispositif selon l'invention permet de supprimer les imprécisions de ces algorithmes en substituant une mesure à une estimation et en supprimant les risques d'erreurs inhérentes aux défaillances dans la communication avec le terminal, ledit dispositif étant dissocié du terminal.

Selon un mode de réalisation du dispositif selon l'invention, le taux de charge est déterminé sur une plage de fréquence réservée à l'aviation civile en bande L, les impulsions étant émises par un terminal MIDS émettant en TDMA. Avantageusement, la forme d'onde utilisée par le terminal est définie par la norme STANAG 4175, le cycle TDMA comprenant 128 intervalles temporels par seconde, le terminal émettant en évasion de fréquence, avantageusement à plusieurs dizaines de milliers de sauts par seconde.

Selon ce mode de réalisation, les impulsions peuvent être détectées, soit à partir du signal d'activation de l'amplificateur de puissance du terminal MIDS pour les terminaux MIDS qui le fournissent, soit via une sonde de mesure de l'enveloppe des impulsions produites dans le circuit d'antenne en sortie du terminal MIDS.

Le dispositif selon l'invention permet ainsi de respecter les règles FCA en vigueur au sein de la communauté internationale destinées à permettre une cohabitation des émissions MIDS avec les systèmes de navigation et d'aide à l'atterrissage civil.

Selon un mode de réalisation du dispositif selon l'invention, dans lequel le dispositif est associé à un terminal MIDS, la durée $\Delta t$ est égale à 12 secondes soit 1536 intervalles temporels.

L'invention a également pour objet un système d'enregistrement des valeurs de taux de charge en émission d'un terminal de radiocommunications, le système comportant un dispositif de détermination du taux de charge en émission décrit plus haut et un module d'enregistrement, le dispositif transmettant régulièrement une valeur de taux de charge en émission au module d'enregistrement via une liaison informatique.

Selon un mode de réalisation associé au terminal MIDS-LVT(1), le signal comprenant le train de repères est produit sur le port J7 dudit terminal MIDS, chaque repère étant le signal d'activation de l'émission d'une impulsion.

L'invention a également pour objet un procédé de détermination du taux de charge en émission d'un terminal de radiocommunications émetteurs d'impulsions selon un cycle répété dans le temps, le cycle comportant au moins deux étapes :

■ compter le nombre d'impulsions émises par le terminal sur une durée $\Delta t$,
■ diviser le nombre d'impulsions comptées par un nombre fixé afin d'obtenir une valeur de taux de charge en émission.

D'autres caractéristiques apparaîtront à la lecture de la description détaillée donnée à titre d'exemple et non limitative qui suit faite en regard de dessins annexés qui représentent :

- la figure 1, un schéma illustrant un mode de réalisation du dispositif selon l'invention,
- la figure 2a, un exemple d'impulsions émises par un terminal de radiocommunications, et la figure 2b un signal d'enveloppe correspondant aux impulsions de la figure 2a,
- la figure 3, un synoptique présentant un système mettant en oeuvre le dispositif selon l'invention pour enregistrer des mesures de taux de charge en émission d'un terminal de radiocommunications.

Le mode de réalisation proposé par la suite pour illustrer l'invention s'applique au terminal MIDS, c'est pourquoi le taux de charge en émission sera plus simplement qualifié de TSDF.

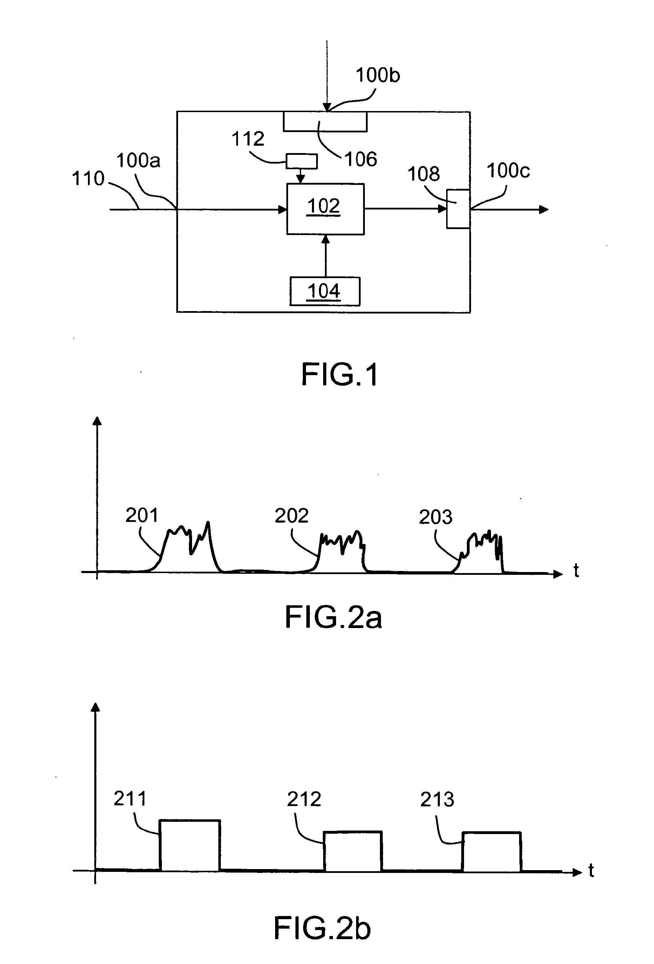

La figure 1 présente un mode de réalisation d'un dispositif selon l'invention. Le dispositif 100 de l'exemple comporte deux entrées 100a, 100b, une sortie 100c, un microcontrôleur 102, un oscillateur local 104, un bloc 106 de gestion de l'alimentation électrique relié à la deuxième entrée 100b, et un port 108 relié à la sortie 100c.

La première entrée 100a reçoit un signal 110 issu d'un terminal de radiocommunications, terminal non représenté sur la figure 1. Les caractéristiques de ce signal 110 dépendent du nombre d'impulsions émises par le terminal. Dans toutes les installations, le signal 110 peut provenir d'un capteur placé au niveau de la prise d'antenne du terminal afin de produire un pic de tension à chaque émission d'une impulsion par l'antenne ; dans ce cas, les terminaux de radiocommunications fonctionnant souvent au sein d'un environnement électromagnétique très encombré, le signal 110 sera acquis à l'aide d'un dispositif radio séparant la voie émission de la voie réception. Plus simplement, lorsque le type de terminal le permet, le signal 110 est un signal d'activation d'émission des impulsions du terminal, autrement dit, le signal 110 est une enveloppe des impulsions émises par le terminal, ladite enveloppe étant directement disponible en sortie du terminal. La figure 2b présente un exemple d'un tel signal 110, à travers un graphique montrant l'évolution de son potentiel électrique dans le temps, la figure 2a étant une représentation des impulsions émises par le même terminal sur une durée identique que pour la figure 2b. A chaque impulsion 201, 202, 203 émise correspond un repère 211, 212, 213 dans le signal 110. Dans l'exemple, chaque repère du signal 110 est un créneau de tension. Les impulsions - dont les enveloppes sont les créneaux - sont, par exemple, émises dans une bande de fréquences dédiée à la sécurité des vols et à la radio-navigation comprise entre 960 MHz et 1215 MHz.

Le signal 110 est transmis au microcontrôleur 102 qui compte le nombre de repères compris dans le signal 110. Le nombre de repères comptés peut être stocké dans un registre du microcontrôleur 102, la valeur contenue dans ce registre étant incrémentée, par exemple, à chaque détection d'un nouveau repère, c'est-à-dire, dans l'exemple, à chaque détection d'un créneau de tension du signal 110.

Selon un autre mode de réalisation, le signal 110 est transmis à des moyens de détection, par exemple composés de filtres passifs, adaptés à détecter chacun des repères pour les transmettre sous une forme directement exploitable au microcontrôleur 102. Ces moyens de détection peuvent être nécessaires, par exemple lorsque le signal 110 comporte des repères bruités. Selon une variante de réalisation, ces moyens de détection sont placés à l'extérieur du dispositif 100, avant la première entrée 100a.

Pour déterminer le TSDF du terminal, le microcontrôleur compte le nombre de repères présents sur ce signal 110 pendant une durée $\Delta t$ fixée, puis ce nombre de repères comptés est rapporté à un nombre fixé de repères. En outre, comme le TSDF est, par définition, exprimé sous la forme d'un pourcentage, on obtient la relation suivante :

$$\text{Taux de charge} = \frac{\text{nombres de repères comptés}}{\text{nombre fixé de repères}} \times 100 \qquad (E1)$$

Le dénominateur de l'équation (E1), égal au quotient résultant de la division du nombre fixé de repères par cent est, par exemple, stocké sur une mémoire 112 accessible en lecture par le microcontrôleur 102. Ce dénominateur est choisi en fonction de la définition que l'on choisit pour établir le TSDF. Ainsi, en choisissant un nombre fixé de repères inférieur au nombre maximum d'impulsions pouvant être émises pendant la durée $\Delta t$, le TSDF peut ainsi dépasser 100%. Par exemple, ce nombre fixé de repères est choisi pour être égal à la moitié du nombre maximal d'impulsions pouvant être émises pendant la durée $\Delta t$. Le TSDF peut alors être calculé par le microcontrôleur 102, en divisant la valeur de comptage contenue dans le registre par le dénominateur contenu dans la mémoire 112.

L'oscillateur local 104 est utilisé pour évaluer la durée $\Delta t$. Les oscillations générées à une fréquence $F_{ol}$ par cet oscillateur local 104 sont comptées par le microcontrôleur 102. Lorsque le nombre d'oscillations $N_{osc}$ (ici égal à $\Delta t \times F_{ol}$) correspondant à l'écoulement de la durée $\Delta t$ est atteint, le microcontrôleur 102 calcule une valeur de TSDF et remet à zéro le registre contenant la valeur de comptage des repères du signal 110. Dans le cas d'un terminal de radiocommunications fonctionnant en TDMA, la durée $\Delta t$ correspond par exemple à la durée d'un cycle TDMA, de sorte qu'une valeur de TSDF est calculée une fois par cycle TDMA.

Le bloc de gestion de l'alimentation 106 reçoit un courant électrique via la deuxième entrée 100b. Ce courant électrique est ensuite réparti vers les modules du dispositif 100 pour les alimenter.

Le port 108 de sortie 100c peut être un port série ou tout autre type de port permettant de produire en sortie 100c la valeur de TSDF dans un format choisi, de préférence standard. Dans l'exemple de la figure 1, le port 108 de sortie 100c est un port série RS-232 en transmission seule produisant une valeur de TSDF codée dans un format texte. Ainsi, en sortie 100c du dispositif 100, on obtient une suite de valeurs de TSDF, chaque valeur étant produite à une fréquence égale à $1/\Delta t$.

Selon un autre mode de réalisation, pour chaque période $\Delta t$ le microcontrôleur 102 compte les repères présents dans le signal 110 et transmet directement ce nombre de repères comptés vers le port 108 de sortie, sans effectuer de calcul supplémentaire. Le TSDF étant proportionnel au nombre de repères comptés, il peut être facilement calculé à l'extérieur du dispositif 100, par exemple à l'aide d'un simple ordinateur personnel connecté sur le port 108 du dispositif 100, le dénominateur de l'équation (E1) étant mémorisé sur l'ordinateur.

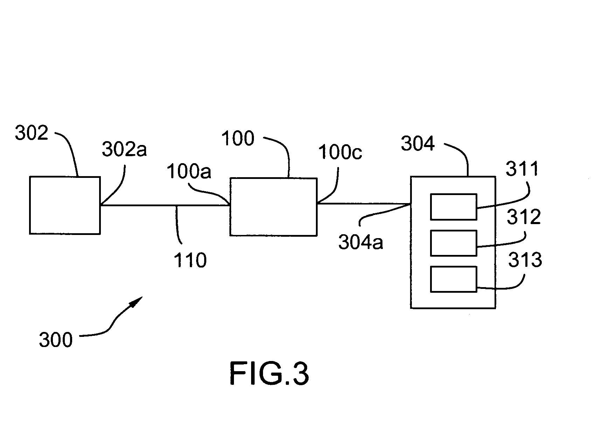

La figure 3 est un synoptique présentant un système mettant en oeuvre le dispositif selon l'invention pour enregistrer et exploiter des mesures de TSDF d'un terminal de radiocommunications. Dans un souci de clarté, les éléments déjà présentés dans la figure précédente porteront les mêmes références.

Le système 300 comporte un terminal de radiocommunications 302, un dispositif selon l'invention 100 et un calculateur 304.

Le terminal de radiocommunications 302 de la figure 3 est un terminal MIDS (« Multifunctional Information Distribution System»}, un système multifonction de distribution de l'information. L'exemple n'est pas limitatif, le dispositif selon l'invention pouvant s'appliquer à d'autres types de terminaux de radiocommunications transmettant par impulsions, comme les terminaux JTIDS (« Joint Tactical Information Distribution System », le système commun de distribution de l'information tactique) ou JTRS (« Joint Tactical Radio System », le système de radio tactique alliée). Le terminal MIDS 302 produit un signal 110 d'activation d'émission des impulsions sur son port de sortie J7, référencé 302a. Ce signal 110 est transmis vers la première entrée 100a du dispositif 100, lequel produit périodiquement une série de valeurs de TSDF en sortie 100c. Ces valeurs de TSDF sont transmises vers le port série 304a du calculateur 304, par exemple un ordinateur personnel. Le calculateur 304 peut alors enregistrer les valeurs de TSDF dans une base de données, établir des statistiques, transmettre les valeurs de TSDF à un centre d'analyse gérant un réseau de terminaux, faciliter et optimiser la planification des émissions des terminaux de ce réseau.

Selon un mode de réalisation du système de la figure 3, le calculateur 304 comporte un premier module pour l'acquisition, l'habillage et la communication des valeurs de TSDF mesurées, un deuxième module de mise à jour d'une base de donnée, et un troisième module pour l'enregistrement des valeurs de TSDF.

Le premier module effectue l'acquisition de la valeur de TSDF, associe à cette valeur le moment précis de sa réception par le module, puis met en forme un message contenant, par exemple, les informations suivantes : la valeur du TSDF, le moment de réception de cette valeur, l'identifiant du terminal émetteur à l'origine de la valeur de TSDF. Le message est ensuite transmis aux deuxième et troisième modules.

Le deuxième module reçoit les messages contenant une valeur de TSDF et met à jour une base d'information pour la gestion du réseau, base souvent qualifiée par l'acronyme anglo-saxon MIB pour « Management Information Base ». Cette base est accessible, via un protocole de communication tel que SNMP (« Simple Network Management Protocol », protocole simple de gestion de réseau), par d'autres calculateurs ou postes distants.

Le troisième module reçoit les messages contenant une valeur de TSDF et enregistre cette valeur dans un fichier sur disque dur.

Le dispositif selon l'invention réalise la mesure du TSDF du terminal MIDS en remplacement des estimations du TSDF réalisées dans l'art antérieur par les systèmes informatiques venant piloter le terminal MIDS, ces systèmes informatiques étant qualifiés de « système hôte ».

Le dispositif réalise la mesure sur la base des émissions effectivement effectuées. A contrario, dans l'art antérieur, les estimations par le système hôte sont basées sur une connaissance a priori des émissions qui dépendent :

- des messages à émettre au terminal MIDS ;
- des émissions probables en fonction des données de configuration du réseau TDMA transmises au terminal MIDS à son initialisation.

Un avantage du dispositif selon l'invention est que la mesure du TSDF du terminal MIDS est réalisée indépendamment de la connaissance de la configuration du réseau TDMA. En particulier, le dispositif selon l'invention est indépendant des reconfigurations dynamiques du réseau TDMA (en cours de fonctionnement), ceci quelqu'en soit l'origine (système hôte, équipement de maintenance, voie radio). A contrario, dans l'art antérieur, pour garantir son estimation du TSDF, le système hôte doit aller surveiller en permanence l'état de configuration du réseau TDMA au travers d'un dialogue dédié avec le terminal MIDS.

Le dispositif selon l'invention réalise la mesure du TSDF du terminal MIDS indépendamment de la connaissance du flux de données à émettre, alors que, dans l'art antérieur, pour garantir son estimation du TSDF, le système hôte doit recenser les messages à émettre au terminal MIDS.

Le dispositif selon l'invention réalise la mesure du TSDF du terminal MIDS indépendamment de la connaissance de la variante de forme d'onde utilisée par le terminal MIDS pour transmettre, en particulier indépendamment de la décision prise à chaque intervalle temporel TDMA par le terminal MIDS de transmettre en 258 ou 444 impulsions (conditionnement de l'information). A contrario, dans l'art antérieur, pour garantir son estimation du TSDF, le système hôte doit maximiser le TSDF de chaque intervalle temporel pouvant être transmis en 444 impulsions.

La mesure du TSDF du terminal MIDS réalisée par le dispositif selon l'invention décompte les suppressions d'émission non contrôlées par le système hôte, parmi lesquelles figurent en particulier:

- les mises en attente d'émission (d'une durée d'un ou de plusieurs intervalles temporels) décidées par le terminal MIDS en cas de dépassement du TSDF maximum imposé par les règles en vigueur ;
- les suspensions d'émission imposées par des signaux discrets de suppression (une ou plusieurs impulsions) envoyés par la plate-forme d'accueil pour assurer la compatibilité électromagnétique avec les équipements radio cosite, tels que, par exemple des interrogateurs/répondeurs IFF, interrogateurs TACAN (TACtical Air Navigation), interrogateurs DME, ou radar de veille.

A contrario, dans l'art antérieur, le système hôte surestime le TSDF car il n'a pas connaissance de ces suppressions.

La mesure du TSDF du terminal MIDS réalisée par le dispositif compte les émissions du terminal non contrôlées par le système hôte, en particulier les messages relayés par le terminal sur le réseau TDMA, les émissions phonies numérisées (qui ne passent pas par le système hôte), les messages de synchronisation TDMA, les accusés de réception entre terminaux MIDS participants au réseau TDMA. A contrario, dans l'art antérieur, le système hôte, n'ayant pas connaissance de ces émissions, doit en prévoir la possibilité à partir de la connaissance de l'organisation du réseau TDMA et surestime ainsi le TSDF.

La mesure du TSDF du terminal MIDS réalisée par le dispositif selon l'invention est fiable car indépendante de tout calcul réalisé par le terminal MIDS. Cette mesure est basée soit sur le signal d'activation de l'amplificateur de puissance du terminal MIDS pour les terminaux MIDS qui le fournissent, soit sur la détection de l'enveloppe des impulsions réalisée dans le circuit d'antenne en sortie du terminal MIDS. A contrario, dans l'art antérieur, l'estimation réalisée par le système hôte est basée sur les données échangées avec le terminal MIDS et calculées par le terminal MIDS, tout dysfonctionnement de la communication ou du calcul pouvant alors venir entacher l'estimation réalisée.

Un autre avantage du dispositif selon l'invention est qu'il permet de décharger le système hôte de la charge de calcul du TSDF ce calcul pouvant être gourmant en ressources, en particulier pour des petites plate-formes embarquées.

Par ailleurs, le dispositif selon l'invention permet l'optimisation de l'utilisation du réseau MIDS en temps réel. Il fournit une mesure exacte de l'utilisation du réseau TDMA par le terminal MIDS, permettant ainsi au gestionnaire de réseau un ajustement précis du nombre d'intervalles temporels alloués en émission, cette mesure exacte permettant également la libération de ressources TDMA au bénéfice des autres participants dudit réseau. A contrario, dans l'art antérieur, l'estimation réalisée à partir du système hôte est inexacte ; elle surévalue le nombre d'émissions pour tenir compte des émissions non contrôlées et des variantes de forme d'onde les plus contraignantes, ce qui correspond à une gestion du réseau TDMA sous-optimale.

Avantageusement, le dispositif de mesure du TSDF du terminal MIDS permet d'effectuer des mesures même en cas de déconnexion ou de panne du système hôte ; la mesure étant fournie sur une ligne série en transmission seule, le calculateur exploitant la mesure du TSDF peut être séparé du système hôte ou peut être en redondance dudit système. A contrario, dans l'art antérieur, l'estimation du TSDF par le système hôte est dépendante de l'état de connexion du système hôte avec le terminal MIDS.

Par ailleurs, le dispositif selon l'invention est indépendant de la nature du système hôte exploitant le terminal ceci quelque soit la configuration du terminal MIDS (interface Ethernet, 1553, 3910 ou X25). A contrario, dans l'art antérieur, l'estimation du TSDF par le système hôte nécessite un couplage adapté au terminal MIDS ainsi que le portage de l'algorithme d'estimation sur le calculateur du système hôte.

Enfin, le dispositif de mesure selon l'invention permet la mesure du TSDF en absence de système hôte. Le dispositif d'enregistrement ou de transmission de la mesure du TSDF peut être totalement dissocié du système hôte, en particulier la mesure du TSDF est possible sur des plates-formes ne jouant que le rôle de relais sur le réseau TDMA et ne disposant pas de système hôte.

## Revendications

1. Dispositif de détermination du taux de charge d'un terminal (302) de radiocommunications émetteurs d'impulsions, *le taux de charge étant déterminé sur un cycle répété dans le temps d'une durée $\Delta t$, le dispositif recevant un signal comprenant un train de repères (211, 212, 213), chaque repère correspondant à une impulsion (201, 202, 203) émise par le terminal, le dispositif étant **caractérisé en ce qu'**il comporte un oscillateur local (104) et un microcontrôleur (102) apte à compter les repères dudit signal sur la durée $\Delta t$ pour calculer une valeur de taux de charge en émission, le microcontrôleur (102) évaluant la durée $\Delta t$ en comptant les oscillations délivrées par l'oscillateur local (104).

2. Dispositif selon la revendication 1, **caractérisé en ce que** le taux de charge est déterminé sur une plage de fréquence réservée à l'aviation civile en bande L, les impulsions étant émises par un terminal MIDS émettant en TDMA et en évasion de fréquence.

3. Dispositif selon la revendication 2, **caractérisé en ce que** les impulsions sont détectées, soit à partir du signal d'activation de l'amplificateur de puissance du terminal MIDS pour les terminaux MIDS qui le fournissent, soit via une sonde de mesure de l'enveloppe des impulsions produites dans le circuit d'antenne en sortie du terminal MIDS.

4. Dispositif selon l'une des revendications précédentes, **caractérisé en ce que** les impulsions sont émises sur une bande de fréquences comprise entre 960 MHz et 1215 MHz.

5. Système d'enregistrement des valeurs de taux de charge en émission d'un terminal de radiocommunications, **caractérisé en ce qu'**il comporte un dispositif de détermination du taux de charge en émission selon l'une des revendications précédentes et un module d'enregistrement, le dispositif transmettant régulièrement une valeur de taux de charge en émission au module d'enregistrement via une liaison informatique.

6. Système selon la revendication 5, **caractérisé en ce que** le terminal est un terminal MIDS, le signal comprenant le train de repères étant produit sur le port J7 dudit terminal MIDS.

7. Procédé de détermination du taux de charge en émission d'un terminal de radiocommunications émetteurs d'impulsions selon un cycle répété dans le temps, **caractérisé en ce que** le cycle comporte au moins deux étapes :

   ■ compter le nombre d'impulsions émises par le terminal sur une durée $\Delta t$,
   ■ diviser le nombre d'impulsions comptées par un nombre fixé afin d'obtenir une valeur de taux de charge en émission.

**Claims**

1. A device for determining the load rate of a radio-communication terminal, (302) emitting pulses, the load rate bein determined over a cycle that is repeat over a time duration $\Delta t$, the device receiving a signal with a train of references (211, 212, 213), each reference corresponding to a pulse (201, 202, 203) emitted by said terminal, said device being **characterised in that** it comprises a local oscillator (104) and a microcontroller (102) that is designed to count the references of said signal over the duration $\Delta t$ in order to calculate an emission load rate value, said microcontroller (102) evaluating the duration $\Delta t$ by counting the oscillations delivered by the local oscillator (104).

2. The device according to claim 1, **characterised in that** the load rate is determined over a frequency range that is reserved for civil aviation in band L, the pulses being emitted by an MIDS terminal emitting in TDMA and in frequency hopping.

3. The device according to claim 2, **characterised in that** the pulses are detected either on the basis of the signal for activating the power amplifier of the MIDS terminal, for the MIDS terminals that supply said signal, or via a probe for measuring the envelope of the pulses produced in the antenna circuit at the output of the MIDS terminal.

4. The device according to any one of the preceding claims, **characterised in that** the pulses are emitted over a frequency band of between 960 MHz and 1,215 MHz.

5. A system for recording the emission load rate values of a radio-communication terminal, **characterised in that** it comprises a device for determining the emission load rate according to any one of the receding claims and a recording module, the device regularly transmitting an emission load rate value to the recording module via an electronic link.

6. The system according to claim 5, **characterised in that** the terminal, is an MIDS terminal, the signal comprising the train of references being produced on port J7 of said MIDS terminal.

7. A method for determining the emission load rate of a radio-communication terminal emitting pulses according to a cycle that is repeated over time, **characterised in that** said cycle comprises at least two steps:

   - counting the number of pulses emitted by the terminal over a duration $\Delta t$;
   - dividing the number of counted pulses by a fixed number so as to obtain an emission load rate value.

**Patentansprüche**

1. Vorrichtung zum Ermitteln des Belastungsgrads eines Impulse emittierenden Funkkommunikationsendgerätes (302), wobei der Belastungsgrad über einen Zyklus ermittelt wird, der nach einer Zeit mit der Dauer $\Delta$t wiederholt wird, wobei die Vorrichtung ein Signal mit einer Folge von Referenzen (211, 212, 213) empfängt, wobei jede Referenz (211, 212, 213) einem von dem Endgerät emittierten Impuls (201, 202, 203) entspricht, wobei die Vorrichtung **dadurch gekennzeichnet ist, dass** sie einen Lokaloszillator (104) und eine Mikrosteuerung (102) zum Zählen der Referenzen des Signals über die Dauer $\Delta$t umfasst, um einen Wert für den Emissionsbelastungsgrad zu berechnen, wobei die Mikrosteuerung (102) die Dauer $\Delta$t durch Zählen der von dem Lokaloszillator (104) erzeugten Oszillationen beurteilt.

2. Vorrichtung nach Anspruch 1, **dadurch gekennzeichnet, dass** der Belastungsgrad über einen Frequenzbereich ermittelt wird, der für die Zivilluftfahrt im Band L reserviert ist, wobei die Impulse von einem MIDS-Endgerät emittiert werden, das im TDMA-und im Frequenzsprungverfahren emittiert.

3. Vorrichtung nach Anspruch 2, **dadurch gekennzeichnet, dass** die Impulse entweder von dem Signal zum Aktivieren des Leistungsverstärkers des MIDS-Endgeräts für die das Signal liefernden MIDS-Endgeräte oder über eine Sonde zum Messen der Hüllkurve der Impulse erfasst werden, die in der Antennenschaltung am Ausgang des MIDS-Endgeräts erzeugt werden.

4. Vorrichtung nach einem der vorherigen Ansprüche, **dadurch gekennzeichnet, dass** die Impulse auf einem Frequenzband zwischen 960 MHz und 1215 MHz emittiert werden.

5. System zum Aufzeichnen der Werte des Emissionsbelastungsgrads eines Funkkommunikationsendgeräts, **dadurch gekennzeichnet, dass** es eine Vorrichtung zum Ermitteln des Emissionsbelastungsgrads nach einem der vorherigen Ansprüche und ein Aufzeichnungsmodul umfasst, wobei die Vorrichtung regelmäßig einen Wert für den Emissionsbelastungsgrad über eine Datenverbindung zu dem Aufzeichnungsmodul überträgt.

6. system nach Anspruch 5, **dadurch gekennzeichnet, dass** das Endgerät ein MIDS-Endgerät ist, wobei das Signal die auf Port J7 des MIDS-Endgeräts produzierte Folge von Referenzen umfasst.

7. Verfahren zum Ermitteln des Emissionsbelastungsgrads eines Funkkommunikationsendgeräts, das Impulse gemäß einem im Laufe der Zeit wiederholten Zyklus emittiert, **dadurch gekennzeichnet, dass** der Zyklus wenigstens zwei Schritte beinhaltet:

- Zählen der Anzahl der von dem Endgerät über die Dauer $\Delta$t emittierten Impulse;
- Dividieren der Zahl der gezählten Impulse durch eine feste Zahl, um einen Wert für den Emissionsbelastungsgrad zu erhalten.

FIG.1

FIG.2a

FIG.2b

FIG.3